# EUROPÄISCHE PATENTANMELDUNG

(11) **EP 2 255 910 A1**
(43) Veröffentlichungstag der Anmeldung: **01.12.2010**
(21) Anmeldenummer: 10002137.7
(22) Anmeldetag: 02.03.2010
(51) Int. Cl.: B23F 23/12, B24B 53/053, B23F 1/02, B24B 53/075

(54) **Verzahnmaschine**

(30) Priorität: 29.05.2009 DE 102009023275
(71) Anmelder: LIEBHERR-VERZAHNTECHNIK GmbH, 87437 Kempten (DE)
(72) Erfinder: Mundt, Alois, Dr., 87435 Kempten (DE)
(74) Vertreter: Laufhütte, Dieter

(57) **Zusammenfassung**

Die Erfindung betrifft eine Verzahnmaschine zum Schleifen von Außen- und/oder Innenprofilen von Werkstücken mit mindestens einem um eine Achse verdrehbaren Bearbeitungskopf, welcher ein Schleifwerkzeug aufweist, und einer Abrichteinheit. Erfindungsgemäß ist die Abrichteinheit im Bereich der Schwenkachse des Bearbeitungskopfes derart gelagert, dass sie zusammen mit dem Bearbeitungskopf um die gemeinsame Schwenkachse verschwenkbar ist und dass sie entlang der Schwenkachse an das abzurichtende Schleifwerkzeug heranfahrbar ist.

## Beschreibung

Die vorliegende Erfindung betrifft eine Verzahnmaschine zum Schleifen von Außen-oder Innenprofilen von Werkstücken mit einem auf einer verschwenkbaren Montagefläche angeordneten Bearbeitungskopf, welcher ein Schleifwerkzeug vorsieht und mit einer Abrichteinheit, insbesondere einer gemeinsamen Abrichteinheit zum Abrichten des Schleifwerkzeugs eines montierten Außen- bzw. Innenschleifkopfes. Als Schleifwerkzeug kann hier zum Beispiel eine Schleifschnecke oder Schleifscheibe zum Einsatz kommen.

Um einen genauen Rundlauf und die korrekte geometrische Form des Schleifwerkzeuges zu erreichen bzw. zu erhalten, muß das Schleifwerkzeug in unterschiedlichen Intervallen mittels Abrichten geformt und geschärft werden. Zudem dient das Abrichten dazu, ein Schleifwerkzeug zu profilieren bzw. zu kalibrieren. Es hat auch den Zweck, Verunreinigungen, sowie stumpf gewordene Körnerschichten, aus dem Schleifkörper herauszubrechen und somit scharfe Körner freizulegen. Wünschenswert ist es dabei, dass dieser Vorgang des Abrichtens durch ein geeignetes Abrichtwerkzeug möglichst in der Schleifmaschine, gegebenenfalls während des Schleifprozesses durchgeführt werden kann. Dieses sogenannte Continous Dressing ist eine Sonderform des Abrichtens.

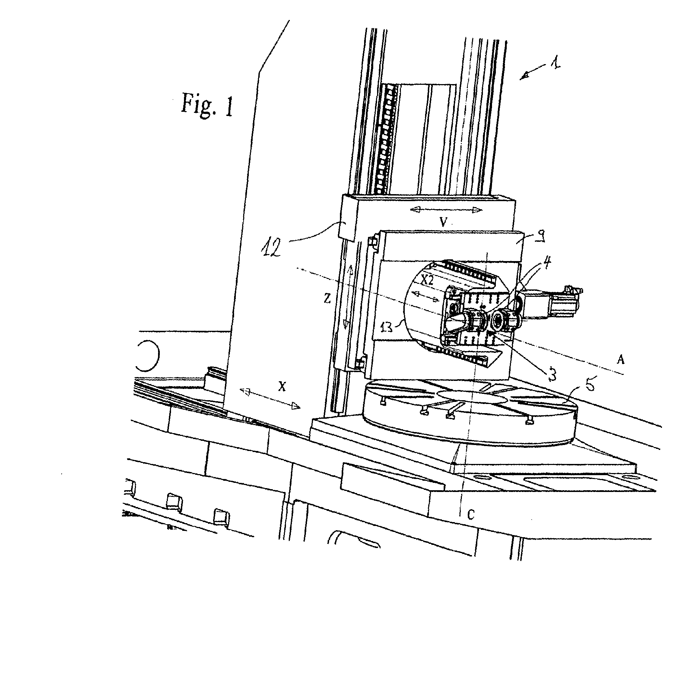

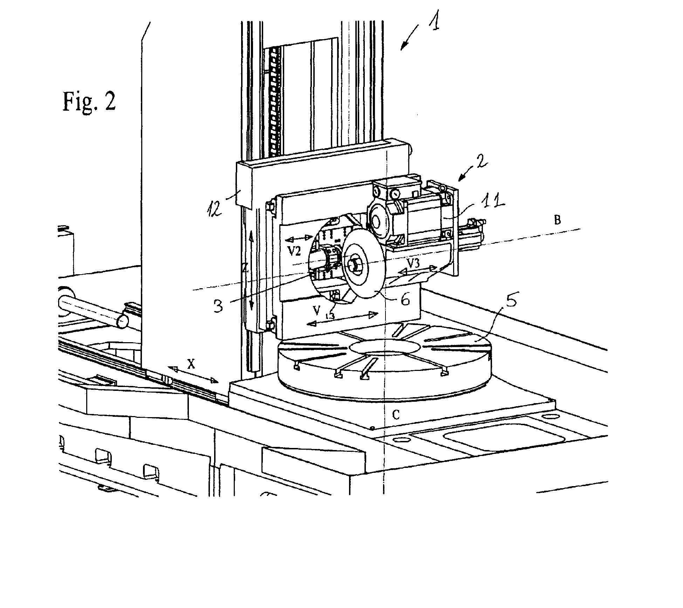

Die DE 297 17 193 U1 beschreibt einen Schleifkopf zur Herstellung von Innenprofilen von Zahnrädern. Figur 1 zeigt dort eine komplette Maschine mit Innenschleifknopf , welcher durch eine Schwenkeinrichtung zwischen Arbeitsposition und Abrichtposition hin und her geschwenkt werden kann. Im Detail zeigt die Figur 2a die Bearbeitungsposition, in welcher ein Innenprofil eines Zahnrades bearbeitet werden kann. Um nun die Schleifscheibe abzurichten, wird der Arm nach oben und hinten in Richtung der Schleifkopfbefestigung geschwenkt und dort durch die Abrichtschreibe abgerichtet. Nachteil dieser Ausführungsform ist die Notwendigkeit einer Schwenkachse, so dass die Position der Schleifscheibe zum Zeitpunkt des Abrichtens und zum Zeitpunkt des Schleifens differieren und somit die Genauigkeit des Schwenklagers in das Schleifergebnis mit eingehen kann. Ein weiterer Nachteil dieser Erfindung ist der Umstand, dass durch den Schwenkmechanismus die Länge des Schleifarmes und damit die maximal schleifbare Breite der Innenverzahnung begrenzt ist.

Die DE 103 29 724 B4 betrifft einen Schleifkopf zur Herstellung von Innenprofilen. Dabei wird ein spezieller Innenschleifkopf mit der zugehörigen Abrichteinrichtung beschrieben. Die Abrichteinrichtung ist dabei in Höhenrichtung relativ zur Schleifscheibe verfahrbar und die Schleifscheibe in einer quer zur Höhenrichtung der Schleifscheibe liegenden Richtung relativ verfahrbar zur Abrichteinrichtung. Nachteil dieser Erfindung ist es, dass die Abrichteinrichtung nur für den Innenschleifkopf nutzbar ist, sowie der Schwenkwinkel der Schleifscheibe während des Schleifprozesses zum Abrichten wieder in eine Grundstellung gefahren werden muß.

Aufgabe der vorliegenden Erfindung ist es daher, eine Verzahnmaschine zum Schleifen von gerade und schräg verzahnten Innen- sowie Außenprofilen bereitzustellen, die mit einer Abrichteinheit für das Außen- und Innenschleifen von Profilen ausgestattet ist und die die Nachteile der oben beschriebenen Verzahnmaschinen vermeidet. Weiterhin soll ein Schwenken des Schleifwerkzeuges in eine Grundstellung zum Abrichten derselben nicht mehr notwendig sein. Ebenfalls ist es Aufgabe der vorliegenden Erfindung, dem Fachmann ein verbessertes Verfahren zum Abrichten eines Schleifwerkzeuges für ein Innen- bzw. Außenprofil an die Hand zu geben.

Gelöst wird diese Aufgabe durch eine Verzahnmaschine zum Schleifen von Außen-oder Innenprofilen mit den Merkmalen des Anspruchs 1. Demnach weist die Verzahnmaschine einen auf einer Montagefläche angeordneten Bearbeitungskopf auf, welcher ein Schleifwerkzeug vorsieht, und insbesondere eine gemeinsame Abrichteinheit zum Abrichten des Schleifwerkzeugs eines montierten Außen- bzw. Innenschleifkopfes, wobei die Verzahnmaschine ein Drehlager zum Verschwenken des Schleifwerkzeugs aufweist und die Abrichteinheit im Drehzentrum der Schwenkachse des Schleifwerkzeugs gelagert ist und zusammen mit dem Schleifwerkzeug um die gemeinsame Schwenkachse verschwenkbar ist.

Durch das Verschwenken der Abrichteinheit zusammen mit dem Schleifwerkzeug ist es nicht mehr notwendig, das Schleifwerkzeug zum Abrichten in eine bestimmte Position, d.h. eine Grundstellung, zurück zu verschwenken. Damit ist es bei der erfindungsgemäßen Verzahnmaschine nicht notwendig, eine zusätzliche Schwenkachse zum Verschwenken des Schleifwerkzeuges in Richtung der Abrichteinheit vorzusehen, wodurch vermieden wird, dass die Positionen des Schleifwerkzeuges zum Zeitpunkt des Abrichtens und zum Zeitpunkt des Schleifens differieren und somit die Genauigkeit des Schwenklagers in das Schleifergebnis mit eingehen könnte.

In einer Ausführungsvariante sind das Drehlager zum Verschwenken des Schleifwerkzeugs sowie die Abrichteinheit am Maschinenkorpus angeordnet und das Schleifwerkzeug ist über die Schwenkachse verschwenkbare Montagefläche und dem darauf montierten Bearbeitungskopf verschwenkbar. Hierbei ergibt sich der Vorteil, dass unabhängig von dem auf der Montagefläche montierten Bearbeitungskopf eine gemeinsame Abrichteinheit zum Abrichten des Schleifwerkzeugs verwendbar ist. Beispielsweise kann ein auf der Montagefläche montierter Innenschleifkopf durch die Abrichteinheit der Verzahnmaschine abgerichtet werden und das Austauschen des Innenschleifkopfes gegen einen Außenschleifkopf erfordert keine weitere Modifizierung der Abrichteinheit. Dies vermindert bei der Produktion von Zahnrädern den Zeitaufwand beim Umbau der erfindungsgemäßen Verzahnmaschine erheblich.

Eine alternative Ausführung der erfindungsgemäßen Verzahnmaschine ist dadurch gegeben, dass das Drehlager zum Verschwenken des Schleifwerkzeuges am schleifscheibenseitigen Ende des Bearbeitungskopfes angeordnet ist und die Abrichteinheit ebenfalls am schleifscheibenseitigen Ende des Bearbeitungskopfes angeordnet ist, wodurch Abrichteinheit und Schleifwerkzeug um eine gemeinsame Drehachse verschwenkbar sind. Hierbei handelt es sich um eine spezielle Ausführungsvariante eines Bearbeitungskopfes zur Erstellung von Innenprofilen mittels der erfindungsgemäßen Verzahnmaschine. Insbesondere bei Innenverzahnungen mit größerem Werkstückinnendurchmesser kann der Innenschleifkopf so groß gebaut werden, dass das Drehlager zum Schwenken der Schleifscheibe von der Aufhängeposition des Schleifkopfes, nach unten in die Spitze des Innenschleifkopfes verlagert werden kann. Weiterhin kann in dieser Ausführungsform der Erfindung die Abrichteinrichtung innerhalb dieser Drehachse positioniert werden. Dadurch wird ein kontinuierlicher Abrichtprozeß auch während des Schleifens einer Innenverzahnung durchführbar.

Vorteilhafterweise ist die Abrichteinheit vom Drehzentrum der Schwenkachse linear zum Abrichten zu dem jeweiligen Schleifwerkzeug hin verfahrbar. Dabei wird die Abrichteinheit ausgehend vom Drehzentrum, das heißt im konkreten Fall vom Drehlager, entlang der Drehachse in Richtung des Schleifwerkzeugs verfahren. Hierbei ist zum Abrichten des Schleifwerkzeugs nur eine Bewegung der Abrichteinheit notwendig, so dass das Schleifwerkzeug nicht aus seiner ursprünglichen Bearbeitungsposition verfahren werden muß. Dadurch können Ungenauigkeit bei der Rückkehrbewegung des Schleifwerkzeuges von einer Abrichtposition in die Bearbeitungsposition vermieden werden.

In weiterhin vorteilhafter Weise ist die Abrichteinheit in Achsrichtung der Schleifscheibe bzw. Schleifschnecke verfahrbar. Dadurch läßt sich die Abrichteinheit seitlich an das entsprechende Schleifwerkzeug heranfahren, bis die Abrichteinheit an der Oberfläche des Schleifwerkzeugs anliegt.

Denkbar ist hierbei auch, dass zusätzlich das Schleifwerkzeug entlang seiner Achsrichtung in Richtung der Abrichteinheit verfahrbar ist. Dies stellt jedoch nur eine Alternative zum Verfahren der Abrichteinheit in Achsrichtung des Schleifwerkzeuges dar, wobei bevorzugt versucht wird, das Schleifwerkzeug konstant auf seiner Bearbeitungsposition zu halten. Durch diese bevorzugte Ausgestaltung der erfindungsgemäßen Verzahnmaschine muß das Schleifwerkzeug zum Abrichten nicht aus seiner Bearbeitungsposition verfahren werden, wodurch Ungenauigkeiten bei der Bearbeitung des Werkstücks vermieden werden, die aus der Rückfahrbewegung des Schleifwerkzeugs aus der Abrichtposition in die Bearbeitungsposition resultieren können.

Vorteilhafterweise sieht die Abrichteinheit mindestens eine einzelne Abrichtscheibe vor. Denkbar ist hierbei, dass zwei einzelne Abrichtscheiben entlang der Schwenkachse linear zu dem jeweiligen Schleifwerkzeug verfahren werden können und die zwei Abrichtscheiben in Achsrichtung des Schleifwerkzeuges von rechts und links zur Oberfläche des Schleifwerkzeuges hin verfahrbar sind. Dadurch kann das Schleifwerkzeug von beiden Seiten bzw. auf seiner Links- und Rechtsflanke gleichzeitig durch die Abrichteinheit abgerichtet werden.

Die Verzahnmaschine kann zum Schleifen von Außen- und Innenprofilen eine Steuerung aufweisen, die eine automatische Steuerung des Schleifprozesses von Außen- und Innenprofilen zuläßt, sowie das Abrichten des jeweils verwendeten Schleifwerkzeuges. Die Steuerung sieht dabei eine automatische Abwicklung der Bearbeitung eines entsprechenden Werkstücks vor, wobei entweder parallel zum Bearbeitungsprozeß des Werkstücks durch das Schleifwerkzeug ein Abrichtprozeß vorgesehen ist, bzw. der eigentliche Bearbeitungsprozeß durch die automatische Durchführung eines Abrichtprozesses unterbrochen wird.

Vorteilhafterweise weist die Steuerung eine entsprechende Software zur Steuerung der Verzahnmaschine auf, wobei nur ein Programm bzw. Programmteil zur Abrichtung eines Schleifwerkzeuges zum Schleifen eines Außen- bzw. Innenprofils notwendig ist. Dadurch wird ebenfalls erreicht, dass beim Austausch des Bearbeitungskopfes der erfindungsgemäßen Verzahnmaschine zum Schleifen von Außen-oder Innenprofilen keine weiteren Maßnahmen zur Anpassung der Abrichteinheit an den ausgetauschten Bearbeitungskopf getroffen werden müssen.

Weiterhin zeigt die vorliegende Erfindung ein Verfahren auf, das zum Betrieb einer zuvor beschriebenen Verzahnmaschine zum Schleifen von Außen- oder Innenprofilen geeignet ist. Dabei weist ein derartiges Verfahren die folgenden Betriebsphasen zum Abrichten eines Schleifwerkzeuges auf:
1. Verfahren der Abrichteinheit in linearer Richtung entlang der Schwenkachse zum Schleifwerkzeug hin,
2. Verfahren der Abrichtscheibe oder der mindestens zwei Abrichtscheiben in Achsrichtung des Schleifwerkzeuges,
3. Anstellen der Abrichtscheibe bzw. Abrichtscheiben jeweils von rechts oder links an die Oberfläche des Schleifwerkzeuges,
4. Die Bewegungen aus 1. und 2. werden entlang der Flankenlinie des Schleifwerkzeuges während des Abrichtvorgangs gesteuert.

Durch eine geeignete Steuerung der Bewegung der Abrichteinheit entlang der beiden Achsen sind nahezu beliebige Konturen möglich. Somit lassen sich auch komplizierte Flankenlinienmodifikationen realisieren, wie es beim Profilschleifen teilweise benötigt wird.

Weiterhin ist es möglich, dass das Schleifwerkzeug zusätzlich entlang seiner Achsrichtung in Richtung wenigstens einer Abrichtscheibe verfahren wird, wodurch sich eine Zeitersparnis während des Abrichtvorgangs ergibt.

Vorteilhafterweise wird das beschriebene Verfahren zum Abrichten eines Schleifwerkzeugs in einer erfindungsgemäßen Verzahnmaschine durch eine NC-Steuerung gesteuert. Die Bewegungen, die der Abrichter ausführen muß, sind beim Abrichten der Außen- bzw. Innenschleifscheiben identisch. Dies bietet einige Vorteile bei der Software, da nur ein Programm für den Abrichtprozeß benötigt wird. Weiterhin läßt sich durch die NC-Steuerung der beiden Bewegungsachsen der Abrichtscheiben nahezu jede beliebige Kontur verwirklichen.

Durch das erfindungsgemäße Verfahren zum Betrieb der erfindungsgemäßen Verzahnmaschine zum Schleifen von Außen- oder Innenprofilen läßt sich das Schleifwerkzeug während des Schleifprozesses eines Außenprofils kontinuierlich durch die Abrichteinheit abrichten. Dabei wird der Vorteil ausgenutzt, dass das Schleifwerkzeug nicht in eine Abrichtposition verfahren werden muß. Vielmehr wird die Abrichteinheit zum Abrichten an das Schleifwerkzeug verfahren, wodurch das Schleifwerkzeug während eines Schleifprozesses durch die Abrichteinheit abgerichtet werden kann. Dieser wesentliche Vorteil resultiert aus dem Merkmal der erfindungsgemäßen Verzahnmaschine, dass diese ein Drehlager zum Verschwenken des Schleifwerkzeugs aufweist und die Abrichteinrichtung im Drehzentrum der Schwenkachse des Schleifwerkzeugs gelagert ist und zusammen mit dem Schleifwerkzeug um eine gemeinsame Drehachse verschwenkbar ist. Dadurch wird die Abrichteinheit während des Bearbeitungsprozesses eines Werkstücks zusammen mit dem Schleifwerkzeug verschwenkt, wodurch sich zu jeder Zeit ein paralleler Verlauf der beiden Scheiben, das heißt des Schleifwerkzeuges und der Abrichtscheibe, ergibt.

Beim Abrichten eines Schleifwerkzeuges zum Schleifen eines Innenprofils sind ein paar Besonderheiten zu beachten. Vorteilhafterweise wird das Schleifwerkzeug während des Innenprofilschleifens zum Weitertakten in die nächste Lücke nach oben oder unten aus der Verzahnung gefahren und der Abrichtprozeß derart gesteuert, dass immer in der oberen Teilposition der Schleifscheibe bzw. Schleifschnecke diese durch die Abrichteinheit abgerichtet wird. Auch hierbei ist eine zusätzliche Schwenkbewegung nicht notwendig, da der gesamte Innenschleifkopf und die Abrichteinrichtung gemeinsam geschwenkt werden. Bevorzugt wird diese Bauform bei kleinerem Innendurchmesser der Verzahnung gewählt.

Vorteilhafterweise läßt sich bei einer Verzahnmaschine zum Schleifen von Außen-oder Innenprofilen mit einem am schleifscheibenseitigen Ende des Bearbeitungskopfes angeordneten Drehlager zum Verschwenken des Schleifwerkzeuges ein Verfahren durchführen bei dem das Schleifwerkzeug während des Schleifprozesses eines Innenprofils kontinuierlich durch die Abrichteinheit abgerichtet wird. Dabei wird die im Bearbeitungskopf integrierte Abrichteinheit zur Innenverzahnung mit in den zu bearbeitenden Innenraum des Werkstück verfahren, wodurch der kontinuierliche Abrichtprozess ermöglicht wird.

Weitere Merkmale, Einzelheiten und Vorteile der Erfindung ergeben sich aus den anhand der Zeichnung dargestellten Ausführungsbeispiele. Dabei zeigen:
- Figur 1:: die erfindungsgemäße Verzahnmaschine ohne einen montierten Bear- beitungskopf,
- Figur 2:: die erfindungsgemäße Verzahnmaschine mit einem montierten Bearbei- tungskopf zum Schleifen von Außenprofilen,
- Figur 3:: die erfindungsgemäße Verzahnmaschine mit einem montierten Bearbei- tungskopf zum Schleifen eines Innenprofils,
- Figur 4:: die erfindungsgemäße Verzahnmaschine aus Figur 2 während eines Ab- richtprozesses,
- Figur 5:: die erfindungsgemäße Verzahnmaschine aus Figur 3 während eines Ab- richtprozesses und
- Figur 6:: eine abgewandelte Ausführungsform der erfindungsgemäßen Verzahn- maschine.

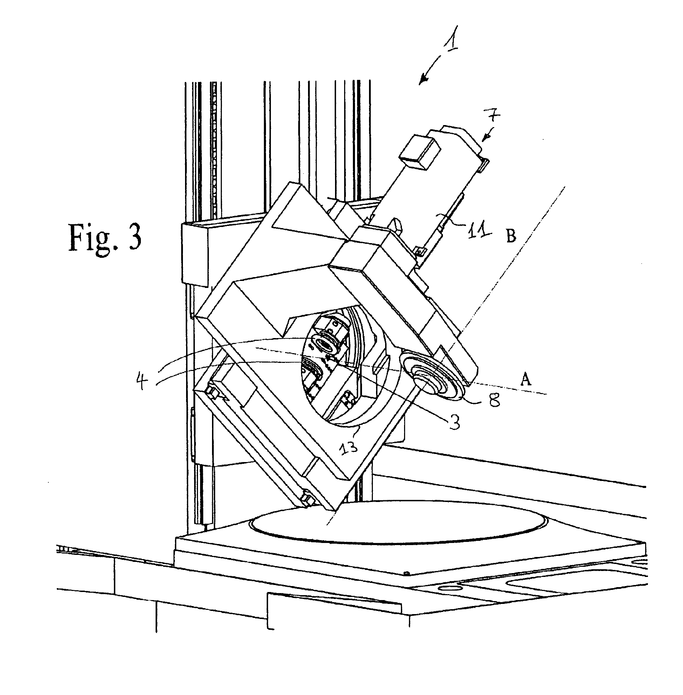

Der generelle Aufbau der Verzahnmaschine wird anhand Figur 1 näher erläutert. Diese weist einen Maschinentisch 5 zur Montage einer Werkstückaufnahme auf, auf welchen ein Werkstück aufgespannt werden kann. Der Maschinentisch 5 ist dabei um eine Achse C drehbar, welche vorteilhafterweise senkrecht ausgerichtet ist. Alternativ können aber auch horizontal ausgerichtete Werkstückaufnahmen zum Einsatz kommen. Die Verzahnmaschine 1 weist weiterhin eine oder mehrere Montageflächen 9 zum Montieren eines Bearbeitungskopfes 2,7 (siehe Figur 2 bzw. Figur 3) auf. Auf die Verzahnmaschine 1 kann entweder ein Außenschleifkopf 2 zur Bearbeitung des Außenprofils eines Werkstücks montiert werden oder ein Innenschleifkopf 7 zur Bearbeitung des Innenprofils eines weiteren Werkstücks (siehe Figur 2 bzw. Figur 3). Auf den jeweiligen Bearbeitungsköpfen 2, 7 können eine oder mehrere Schleifwerkzeuge 6, 8 eingespannt werden. Die Schleifwerkzeuge 6, 8 werden dabei durch einen Motor 11 in Rotation um eine Drehachse B versetzt, wobei die Drehachse B der Schleifwerkzeuge in einer Ebene verschwenkbar ist, welche parallel zur Drehachse C des Maschinentisches 5 verläuft. Hierzu kann die Montagefläche 9 und damit der jeweilige Bearbeitungskopf 2, 7 um eine Schwenkachse A (vgl. Figur 1) verschwenkt werden, welche senkrecht auf der Ebene steht, in welcher die Drehachse B der Schleifwerkzeuge 6, 8 verläuft und welche zu dem senkrecht zu der Drehachse C des Maschinentisches 5 verläuft. Weiterhin läßt sich die Montagefläche 9 linear in Richtung ihrer Drehachse B, das heißt entlang des Pfeils V, verschieben. Zusätzlich läßt sich die Montagefläche 9 linear in einer Richtung parallel zur Drehachse C des Maschinentisches 5 bewegen, das heißt entlang des Pfeils Z. Ferner kann die Montagefläche in einer Richtung senkrecht zur Drehachse C des Maschinentisches 5 linear bewegt werden, das heißt entlang des Pfeils X, um die Schleifwerkzeuge 6, 8 an ein in der auf dem Maschinentisch 5 montierten Werkstückaufnahme aufgespanntes Werkstück heranzufahren oder von diesem wegzufahren oder gezielte Korrekturen zu erzielen.

Weiterhin besitzt die erfindungsgemäße Verzahnmaschine 1 eine Abrichteinheit 3, welche unabhängig von dem montierten Bearbeitungskopf 2,7 das Schleifwerkzeug 6, 8 des Bearbeitungskopfes 2,7 abrichten kann. Dabei kann die Abrichteinheit 3 gemeinsam mit den Montageflächen 9 bzw. des montierten Bearbeitungskopfes 2, 7 um die Schwenkachse A verschwenkt werden, welche senkrecht auf der Ebene steht, in welcher die Drehachse B des Schleifwerkzeuges 6,8 verläuft und welche senkrecht zu der Drehachse C des Maschinentisches 5 verläuft. Weiterhin läßt sich die auf der Schwenkachse A angeordnete Abrichteinheit 3 entlang der Schwenkachse A in Richtung des Pfeiles X2 linear zu demjeweiligen Schleifwerkzeug 6, 8 hin zum Abrichten verfahren. Hierzu ist sie auf einem Achsialschlitten 14 angeordnet. Dabei weist die Montagefläche 9 eine Öffnung 13 auf, durch die die Abrichteinheit 3 ausgehend vom Maschinenständer 12 entlang der Schwenkachse A in Richtung des montierten Schleifwerkzeuges 6, 8 verfahrbar ist.

Weiterhin sieht die Abrichteinheit 3 zwei einzelne Abrichtscheiben 4 vor, die durch einen weiteren Motor um eine Drehachse parallel zur Drehachse B des verwendeten schleifwerkzeuges 6, 8 in Rotation versetzt werden. Durch die erfindungsgemäße Verzahnmaschine 1 ist sichergestellt, dass die Drehachse des Schleifwerkzeuges 6,8 und der Abrichtscheiben 4 unabhängig von den Maschineninenbewegungsfreiheitsgraden zu jedem Zeitpunkt parallel zueinander verlaufen. Dadurch wird eine unerwünschte Schwenkbewegung beim Verfahren zwischen Bearbeitungsposition und Abrichtposition vermieden. Zusätzlich lassen sich die beiden Abrichtscheiben 4 entlang der Achse V2 (Figur 2)verschieben, wobei die beiden Abrichtscheiben 4 gemeinsam oder getrennt in V2 Richtung bewegt werden können.

Figur 2 zeigt die Verzahnmaschine 1 mit einem auf der Montagefläche 9 montierten Außenschleifkopf 2. Der Außenschleifkopf 2 weist dabei ein Schleifwerkzeug 6 auf, das zum Schleifen des Außenprofils bzw. der Außenverzahnung eines entsprechenden in einer auf dem Maschinentisch 5 montierten Werkstückaufnahme aufgespannten Werkstücks dient. Dabei wird das verwendete Schleifwerkzeug 6 durch den Motor 11 um die Drehachse B in eine rotierende Bewegung versetzt. Weiterhin ist aus Figur 2 ersichtlich, dass sich die Verzahnmaschine 1 in einem Schleifbearbeitungsprozeß befindet. Die erfindungsgemäße Abrichteinheit 3 befindet sich dabei in einem eingefahrenen Zustand, in dem die Abrichteinheit 3 in unmittelbarer Nähe zum Maschinenkorpus hinter der Montagefläche 9 und hinter der Öffnung 13 positioniert ist.

In Figur 3 ist die erfindungsgemäße Verzahnmaschine 1 mit einem auf die Montagefläche 9 montierten Innenschleifkopf 7 dargestellt. Dabei ist die Montagefläche 9, sowie der montierte Innenschleifkopf 7 um die Schwenkachse A gegen den Uhrzeigersinn verschwenkt. Die Abrichteinheit 3 befindet sich ebenfalls im eingefahrenen Zustand hinter der Montagefläche 9, wobei ersichtlich wird, dass die Abrichteinheit 3 ebenfalls um die Schwenkachse A synchron zum Innenschleifkopf 7 gegen den Uhrzeigersinn verschwenkt ist. Dadurch befinden sich die kreisrunden Oberflächen der Abrichtscheiben 4 sowie der Schleifscheibe 8 auf parallelen Ebenen.

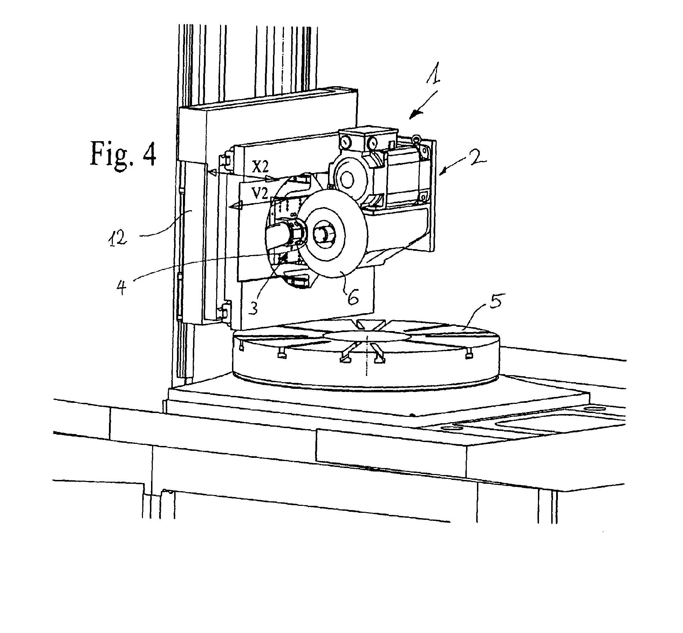

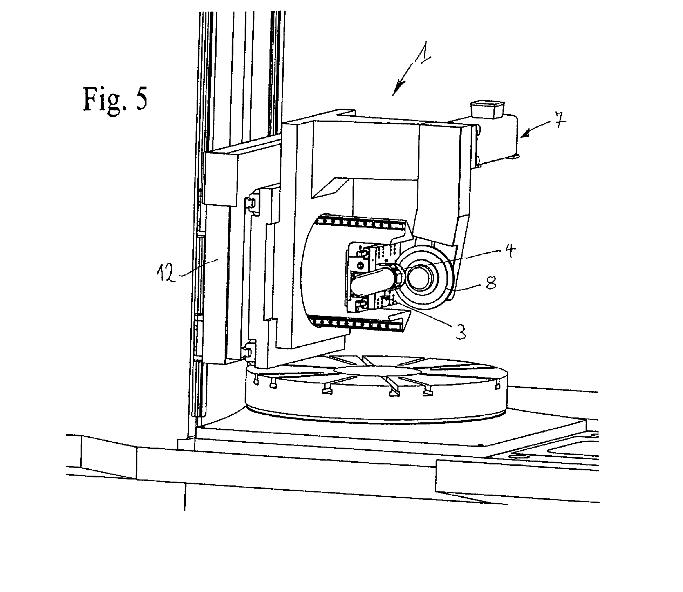

Anhand der Figuren 4, 5 soll das erfindungsgemäße Verfahren zum Abrichten des Schleifwerkzeugs 6, 8 eines Innen- bzw. Außenschleifkopfs erläutert werden. Dabei zeigt Figur 4 die in Richtung X2 entlang der Schwenkachse A an das Schleifwerkzeug 6 gefahrene Abrichteinheit 3. Weiterhin wurden die beiden Abrichtscheiben 4 entlang der Achse V2 jeweils von rechts und/oder links an die Oberfläche des Schleifwerkzeuges 6 herangefahren. Durch die Rotationsbewegung um die parallel verlaufenden Drehachsen B der Abrichtscheiben 4 sowie des Schleifwerkzeuges 6 erfolgt nun der Abrichtvorgang des Schleifwerkzeuges 6. Mittels einer implementierten NC-Steuerung werden durch bestimmte Bewegungen der Abrichtscheiben entlang der Richtungen V2, X2 nahezu beliebige Konturen erzeugt. Somit sind auch komplizierte Profilmodifikationen, wie sie beim Profilschleifen teilweise benötigt werden, möglich.

In Figur 5 ist der korrespondierende Abrichtprozeß der Verzahnmaschine 1 für einen montierten Innenschleifkopf 7 dargestellt.

Sind die beiden Drehachsen B der einzelnen Schleifwerkzeuge 6 bzw. 8 der beiden Bearbeitungsköpfe 2, 7 identisch, das heißt haben sie die identische Lage im Raum, so sind die Bewegungen, die die Abrichteinheit ausführen muß, beim Abrichten der Außen- bzw. Innenschleifscheiben identisch. Dies bietet einige Vorteile für die Erstellung der Steuerungssoftware, da nur ein Programm für den Abrichtprozeß benötigt wird.

Bei der in Figur 4 dargestellten Ausführungsvariante der erfindungsgemäßen Verzahnmaschine 1 mit einem montierten Außenschleifkopf 2 ist ein kontinuierlicher Abrichtprozeß während des Schleifvorgangs möglich.

Bei der erfindungsgemäßen Verzahnmaschine 1 mit einem montierten Innenschleifkopf 7 sind, wie in Figur 5 ersichtlich, beim Abrichten der Innenschleifscheibe 8 einige Besonderheiten zu beachten. Dabei wird beim Innenprofilschleifen im Einzelteilverfahren das Schleifwerkzeug 8 zum Weitertakten in die nächste Lücke nach oben oder unten, das heißt entlang der Pfeilrichtung Z aus der Verzahnung gefahren, damit das Schleifwerkzeug 8 nicht mit der Zahnflanke kollidiert. Wenn man den Abrichtprozeß so steuert, dass immer in der oberen Teilposition auch abgerichtet wird, sind nur geringfügige Zusatzwege nach oben notwendig, um genügend Freiraum für die Abrichteinheit 3 über dem Werkstück zu schaffen. Eine zusätzliche Schwenkbewegung ist nicht notwendig, da der gesamte Innenschleifkopf 7 und die Abrichteinheit 3 gemeinsam geschwenkt werden.

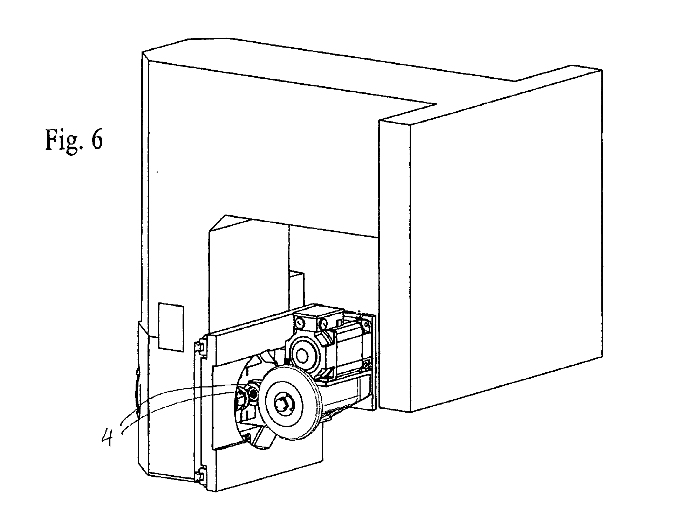

Figur 6 zeigt eine alternative Ausführungsvariante der erfindungsgemäßen Verzahnmaschine 1 mit einem großen Innenschleifkopf 7 mit aufgespanntem Schleifwerkzeug 8. Gleiche Bauteile zu den vorher beschriebenen Ausführungsformen weisen in der Figur 6 gleiche Bezugszahlen auf.

## Patentansprüche

1. Verzahnmaschine (1) zum Schleifen von Außen- und/oder Innenprofilen von Werkstücken mit mindestens einem um eine Achse (A) verdrehbaren Bearbeitungskopf (2, 7), welcher ein Schleifwerkzeug (6, 8) aufweist, und einer Abrichteinheit (3),
**dadurch gekennzeichnet,**
**dass** die Abrichteinheit (3) im Bereich der Schwenkachse (A) des Bearbeitungskopfes (2, 7) derart gelagert ist, dass sie zusammen mit dem Bearbeitungskopf (2, 7) um die gemeinsame Schwenkachse (A) verschwenkbar ist und dass sie entlang der Schwenkachse (A) an das abzurichtende Schleifwerkzeug (6, 8) heranfahrbar ist.

2. Verzahnmaschine (1) nach Anspruch 1, **dadurch gekennzeichnet, dass** im Maschinenständer (12) ein Drehlager zum Verschwenken des Bearbeitungskopfes (2, 7) mit dem Schleifwerkzeug (6, 8) angeordnet ist und dass die Abrichteinheit im Bereich des Drehzentrums dieses Drehlagers über einen Achsialschlitten entlang der Schwenkachse (A) verfahrbar ist.

3. Verzahnmaschine (1) nach Anspruch 2, **dadurch gekennzeichnet, dass** das Drehlager am schleifscheibenseitigen Ende des Bearbeitungskopfes (2, 7) angeordnet ist und dass die Abrichteinheit (3) ebenfalls am schleifscheibenseitigen Ende des Bearbeitungskopfes (2, 7) angeordnet ist, wodurch die Abrichteinheit (3) und das Schleifwerkzeug (6, 8) um eine gemeinsame Drehachse (A) verschwenkbar sind.

4. Verzahnmaschine (1) gemäß einem der Ansprüche 1 bis 3, **dadurch gekennzeichnet, dass** die Abrichteinheit (3) mindestens eine Abrichtscheibe (4) aufweist, die in einer Richtung (V2) entlang der Rotationsachse (B) des Schleifwerkzeuges (6, 8) verfahrbar ist.

5. Verzahnmaschine (1) gemäß einem der Ansprüche 1 bis 4, **dadurch gekennzeichnet, dass** das Schleifwerkzeug (6, 8) entlang seiner Rotationsachse (B) verfahrbar ist.

6. Verzahnmaschine (1) gemäß Anspruch 4 oder 5, **dadurch gekennzeichnet, dass** die mindestens eine Abrichtscheibe (4) in Richtung (V2) der Rotationsachse (B) des Schleifwerkzeuges (6, 8) von rechts und/oder links an die Oberfläche des Schleifwerkzeuges (6,8) anfahrbar sind.

7. Verzahnmaschine (1) gemäß einem der vorangegangenen Ansprüche, **dadurch gekennzeichnet, dass** eine Steuerung vorgesehen ist, die eine automatische Steuerung des Schleifprozesses von Außen- und Innenprofilen zuläßt, sowie das Abrichten des jeweils verwendeten Schleifwerkzeugs (6, 8).

8. Verzahnmaschine (1) gemäß Anspruch 8, **dadurch gekennzeichnet, dass** die Steuerung eine entsprechende Software mit nur einem Programm bzw. Programmteil zur Abrichtung eines Schleifwerkzeugs (6, 8) zum Schleifen eines Außen- bzw. Innenprofils aufweist.

9. Verfahren nach einem der Ansprüche 1 bis 8 mit folgenden Schritten zum Abrichten eines Schleifwerkzeuges (6, 8)
a. Anfahren der Abrichteinheit (3) in linearer Richtung (X2) entlang der Schwenkachse (A) an das Schleifwerkzeug (6, 8);
b. Verfahren der mindestens einen Abrichtscheibe (4) in Richtung (V2) entlang der Rotationsachse (B) des Schleifwerkzeuges (6, 8);
c. Anstellen der mindestens einen Abrichtscheibe (4) jeweils von rechts
oder links an die Oberfläche des Schleifwerkzeuges (6, 8) ;
wobei die Bewegungen entsprechend der Schritte a und b entlang der Flankenlinie des Schleifwerkzeuges (6, 8) während des Abrichtens gesteuert werden.

10. Verfahren nach Anspruch 9, **dadurch gekennzeichnet, dass** zusätzlich das Schleifwerkzeug (6, 8) entlang der Rotationsachse (B) in Richtung wenigstens einer Abrichtscheibe (4) verfahren wird.

11. Verfahren nach Anspruch 9 oder 10, **dadurch gekennzeichnet, dass** der Abrichtvorgang durch eine NC-Steuerung gesteuert wird.

12. Verfahren nach einem der Ansprüche 9 bis 11, **dadurch gekennzeichnet, dass** das Schleifwerkzeug (6,8) während des Schleifprozesses des Außenprofils eines Werkstücks kontinuierlich durch die Abrichteinheit (3) abgerichtet wird.

13. Verfahren nach einem der Ansprüche 9 bis 11, **dadurch gekennzeichnet, dass** der Abrichtprozess zum Abrichten des Schleifwerkzeuges (6, 8) mittels der Abrichteinheit (3) vor oder nach einem Schleifprozess durchgeführt wird.

14. Verfahren nach einem der Ansprüche 9 bis 13, **dadurch gekennzeichnet, dass** während des Innenprofilschleifens das Schleifwerkzeug (8) zum Weitertakten in die nächste Lücke nach oben oder unten aus der Verzahnung gefahren wird und der Abrichtprozess derart gesteuert wird, dass das Schleifwerkzeug immer in der oberen Teilposition durch die Abrichteinheit (3) abgerichtet wird.

15. Verfahren nach einem der Ansprüche 9 bis 11, **dadurch gekennzeichnet, dass** das Schleifwerkzeug (8) während des Schleifprozesses eines Innenprofils kontinuierlich durch die Abrichteinheit (3) abgerichtet wird.
